# EUROPÄISCHE PATENTANMELDUNG

(11) **EP 0 853 247 A2**
(43) Veröffentlichungstag der Anmeldung: **15.07.1998**
(21) Anmeldenummer: 97440142.4
(22) Anmeldetag: 29.12.1997
(51) Int. Cl.: G02B 6/42, G02B 6/34

(54) **Vorrichtung zur präzisen Anordnung von mikrooptischen Bauteilen auf einem Träger**

(30) Priorität: 10.01.1997 DE 19700549
(71) Anmelder: ALCATEL ALSTHOM COMPAGNIE GENERALE D'ELECTRICITE, 75008 Paris (FR)
(72) Erfinder: Seibold, Gerhard, 71686 Remseck (DE); Hehmann, Jörg, 70499 Stuttgart (DE)
(74) Vertreter: Schätzle, Albin, Dipl.-Phys.

(57) **Zusammenfassung**

Die Erfindung betrifft eine Vorrichtung, mit der mikrooptische Bauteile, insbesondere solche, die aufgrund ihrer geometrischen Abmessungen zum Kippen neigen, auf einem Träger präzise angeordnet werden können. Erfindungsgemäß besteht die Vorrichtung aus einem Träger (TR), auf dem mehrere, in Ausnehmungen (A1...A4) eingesetzte Führungselemente (FE1...FE4) angeordnet sind. Die Anordnung der Führungselemente (FE1...F4) erfolgt so, daß das zu positionierende mikrooptische Bauteil (BT) zwischen die Führungselemente (FE1...FE4) eingesetzt werden kann. Eine aktive Justierung ist damit nicht erforderlich. In einem besonders vorteilhaften Ausführungsbeispiel der Erfindung berühren die Führungselemente (FE1...FE4) das mikrooptische Bauteil (BT) an Punkten, die unterschiedlich weit von der Oberfläche des Trägers (TR) entfernt sind. Damit wird ein Kippen besonders wirkungsvoll verhindert. Der Träger (TR) besteht beispielsweise aus einem Silizium-Substrat; die Führungselemente (FE1...FE4) können unbeschichtete Kugellinsen sein, die in naßchemisch in das Substrat geätzte Ausnehmungen eingesetzt sind.

## Beschreibung

Die Erfindung betrifft eine Vorrichtung zur präzisen Anordnung von mikrooptischen Bauteilen auf einem Träger. Bei den anzuordnenden mikrooptischen Bauteilen kann es sich beispielsweise um Interferenzfilter, Mikrospiegel, optische Gitter oder Diffusionslinsen handeln. Der Träger kann eine aus einem Silizium-Einkristall bestehende mikrooptische Bank sein.

Wenn mehrere mikrooptische Bauteile zu einer Baugruppe zusammengesetzt werden sollen, so müssen dieses Bauteile in der Regel mit sehr hoher Genauigkeit zueinander ausgerichtet und anschließend in dieser Lage befestigt werden. Insbesondere dann, wenn Licht in Lichtwellenleiter eingekoppelt werden soll, sind Toleranzen einzuhalten, die in der Größenordnung von 1 µm und darunter liegen. Durchgesetzt haben sich aktive Justierungsverfahren, bei denen die Bauteile in den optischen Strahlengang eingeführt und in ihrer Einbauposition so lange justiert werden, bis der Lichtstrahl die gewünschten Eigenschaften hat. Üblicherweise ist dies eine sehr zeitaufwendige Handarbeit, bei der man unter ständiger Beobachtung eines geeigneten Meßgerätes mittels hochgenauer Verstelleinheiten die Bauteile justiert.

Aus der Patentschrift DE-C1-43 42 844 ist ein elektrooptisches Modul bekannt, bei dem in Ausnehmungen eingesetzte Mikrolinsen als Anschlag für einen Laserriegel dienen. Damit wird erreicht, daß zwischen dem Laserriegel und davor angeordneten, ebenfalls in Ausnehmungen eingesetzte Abbildungslinsen ein genau definierter Abstand besteht. In seitlicher Richtung, d. h. senkrecht zur Ausbreitungsrichtung des emittierten Lichts, muß der Laserriegel aktiv justiert werden.

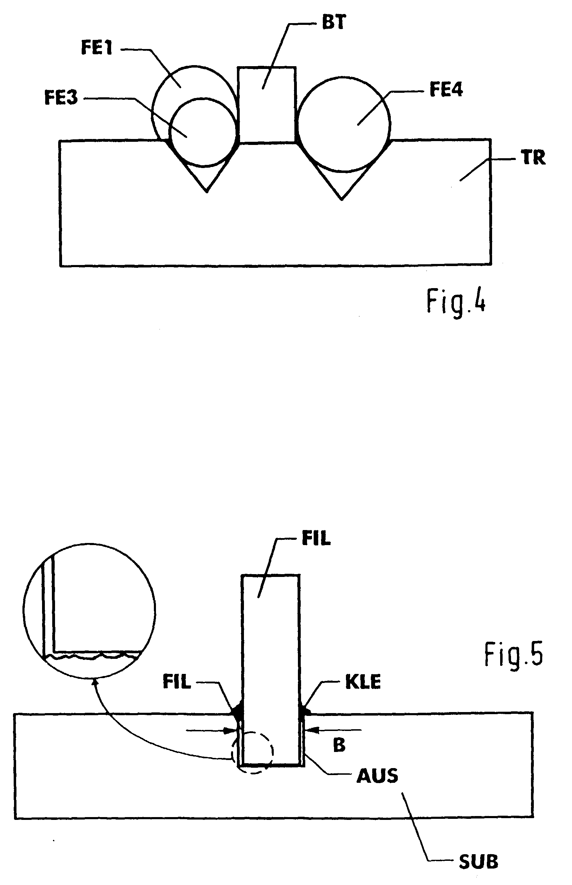

Aus der US-A-5 453 827 ist eine Vorrichtung zur Anordnung eines quaderförmigen Bauteils auf einem Silizium-Träger bekannt. In Fig. 5 ist diese Anordnung in Seitenansicht wiedergegeben. Das Substrat SUB hat eine rechteckförmige Ausnehmung AUS, in die das quaderförmige Bauteil FIL - hier ein Interferenzfilter - eingesetzt ist. Nach dem Einsetzen wird das Bauteil FIL aktiv justiert und an den Klebestellen KLE verklebt. Die rechteckförmige Ausnehmung wird üblicherweise mit einem Präzisions-Sägeschnitt erzeugt. Die Durchführung eines derartigen Sägeschnitts ist sehr aufwendig, da die tatsächliche Breite B der Ausnehmung nur wenig von der Sollbreite abweichen darf. Ist die Ausnehmung zu breit, so hat das Bauteil FIL viel Spiel in der Ausnehmung, wodurch die aktive Justierung erschwert wird. Wenn hingegen die Ausnehmung zu schmal ist, dann kann das Bauteil nicht in die Ausnehmung eingeführt werden.

Bei genauer Ausführung des Sägeschnitts und geringen Herstellungstoleranzen des Bauteils liegen die Seitenwände des Bauteils nicht plan an den Seitenwänden des Sägeschnitts an, sondern sind von einem dünnen Luftspalt getrennt, wie dies in der vergrößerten Darstellung in Fig. 4 deutlich wird. Da außerdem die Fläche, auf der das Bauteil aufliegt, aufgrund des Sägens uneben ist, ist die Lage des Bauteils in der gesägten Ausnehmung konstruktiv nicht exakt festlegbar. Dies ist auch der Grund, warum dort auf eine aktive Justierung nicht verzichtet werden kann.

Es ist daher Aufgabe der Erfindung, eine Vorrichtung anzugeben, mit der mikrooptische Bauteile auf einem Träger präzise positioniert werden können, ohne daß eine aktive Justierung erforderlich ist. Die Vorrichtung soll es insbesondere ermöglichen, dünne quaderförmige mikrooptische Bauteile wie etwa Interferenzfilter mechanisch stabil auf einem Träger anzuordnen.

Die Erfindung löst diese Aufgabe mit den in Anspruch 1 aufgeführten Merkmalen. Erfindungsgemäß hat der Träger Ausnehmungen, in die Führungselemente eingesetzt sind. Die Führungselemente sind vorzugsweise kugel- oder zylinderförmig. Die Führungselemente sind, zusammen mit den sie aufnehmenden Ausnehmungen, so angeordnet, daß das zu positionierende mikrooptische Bauteil zwischen den Führungselementen eingesetzt werden kann, d. h. in der endgültigen Position umgeben die Führungselemente das mikrooptische Bauteil von mehreren Seiten. Durch diese Anordnung der Führungselemente kann das mikrooptische Bauteil auf dem Träger nicht mehr so verschoben werden, daß die Funktion des Bauteils beeinträchtigt wird.

Bei einem besonders vorteilhaften Ausführungsbeispiel der Erfindung ist das mikrooptische Bauteil ein dünnes Plättchen, welches aufrecht auf dem Träger steht. Um ein Kippen des Plättchens zu verhindern, sind erfindungsgemäß zu beiden Seiten des Plättchens Führungselemente angeordnet. Vorzugsweise sind die Führungselemente so dimensioniert, daß die Punkte, an denen die Führungselemente das Plättchen berühren, unterschiedlich weit von der Oberfläche des Trägers entfernt sind. Durch diese Anordnung der Stützpunkte wird verhindert, daß das Plättchen Drehbewegungen um seine Raumdiagonalen ausführen kann.

Die Erfindung wird nachfolgend anhand der Ausführungsbeipiele und der Zeichnungen eingehend erläutert. Es zeigen:
- Fig. 1:: Draufsicht auf ein Ausführungsbeispiel der erfindungsgemäßen Vorrichtung, bei dem ein Umlenkprisma mittels dreier kugelförmiger Führungselemente positioniert ist,
- Fig. 2:: Draufsicht auf ein Ausführungsbeispiel der erfindungsgemäßen Vorrichtung, bei dem ein quaderförmiges mikrooptisches Baute mittels vierer zylinderförmiger Führungselemente positioniert ist,
- Fig. 3a:: Draufsicht auf ein Ausführungsbeispiel der erfindungsgemäßen Vorrichtung, bei dem ein dünnes, in einen Spalt eingelassenes Plättchen mittels vierer kugelförmiger Führungselemente positioniert ist,
- Fig. 3b:: Vorderansicht auf das in Fig. 3 in Aufsicht dargestellte Ausführungsbeispiel,
- Fig. 4:: Vorderansicht auf ein Ausführungsbeispiel der erfindungsgemäßen Vorrichtung, bei dem ein dünnes, auf einem Träger aufgestelltes Plättchen mittels vierer kugelförmiger Führungselemente positioniert ist,
- Fig. 5:: Vorderansicht auf eine Vorrichtung nach dem Stand der Technik, bei der ein dünnes Plättchen in einem Spalt eingelassen ist.

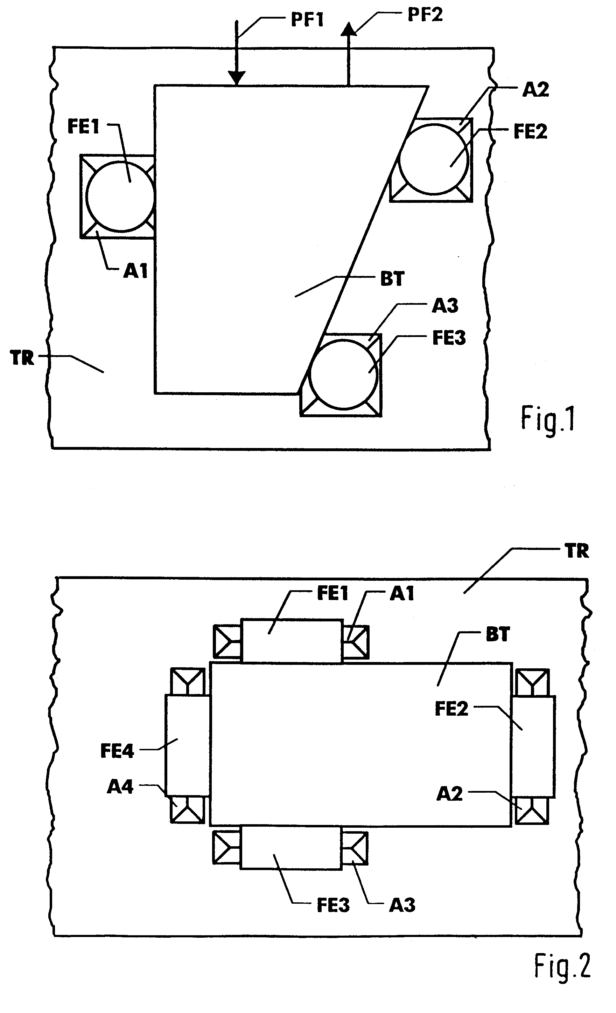

Fig. 1 zeigt ein erstes Ausführungsbeispiel der Erfindung in Draufsicht. Ein mikrooptisches Bauteil BT liegt auf einem Träger TR auf. Drei Führungselemente FE1...FE3, die in geeignet geformte Ausnehmungen A1...A3 eingesetzt sind, dienen als Anschläge für das mikrooptische Bauteil BT. Aufgrund der Anordnung der Führungselemente FE1...FE3 auf dem Träger kann das Bauteil nur noch in der durch den Pfeil PF2 gekennzeichneten Richtung auf der Oberfläche des Trägers TR bewegt werden. Vorzugsweise wird das mikrooptische Bauteil BT von der Seite her, und zwar in Richtung des Pfeils PF1, auf den Träger TR geschoben. Da, wie unten näher erläutert wird, die Führungselemente mit den zugehörigen Ausnehmungen sehr präzise gefertigt werden können, ist das mikrooptische Bauteil BT auf dem Träger passiv mit hoher Genauigkeit justiert. Nach dem seitlichen Einschieben wird das mikrooptische Bauteil BT beispielsweise durch Kleben fixiert.

Bei dem in Fig. 1 dargestellten Ausführungsbeispiel der Erfindung ist der Träger ein Silizium-Einkristall. In einem solchen Silizium-Einkristall lassen sich die Ausnehmungen A1...A3 sehr präzise durch naßchemische, eventuell mehrstufige Ätzverfahren herstellen. Die Ausnehmungen haben dann die Form von Pyramidenstümpfen und eignen sich daher besonders gut zur Aufnahme kugelförmiger Führungselemente. Das zu positionierende mikrooptische Baute BT ist hier ein Umlenkprisma. Mit seiner flachen Unterseite liegt das Umlenkprisma BT plan auf der ebenen Oberfläche des Trägers TR auf.

Fig. 2 zeigt ein zweites Ausführungsbeispiel, bei dem die Führungselemente zylinderförmig sind. Um ein quaderförmiges, auf dem Träger TR aufliegendes mikrooptisches Bauteil BT herum sind vier Ausnehmungen A1...A4 angeordnet. In jede der Ausnehmungen ist jeweils ein zylinderförmiges Führungselement FE1...FE4 eingesetzt. Wenn das mikrooptische Bauteil BT von oben auf den Träger TR aufgesetzt wird, halten die Führungselemente FE1...FE4 das Baute BT exakt in einer Lage, in der keine Verschiebung auf dem Träger mehr möglich ist. In diesem Ausführungsbeispiel sind die zylinderförmigen Führungselemente FE1...FE4 kurze Abschnitte von optischen Fasern; die Ausnehmungen A1...A4 haben die Gestalt von V-förmigen Nuten und sind naßchemisch in den aus Silizium bestehenden Träger TR geätzt.

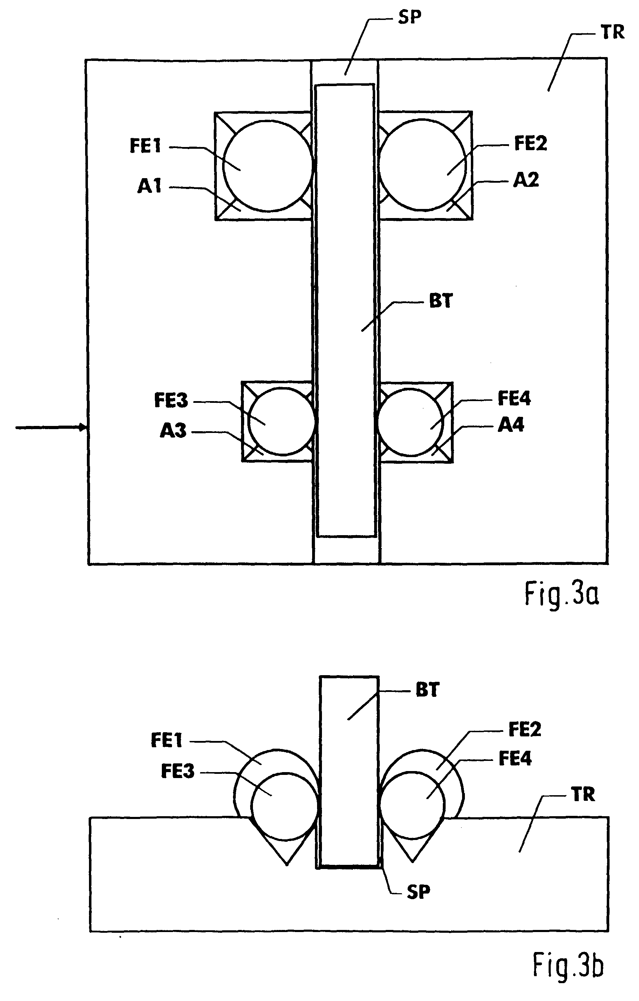

Fig. 3a und 3b zeigen ein besonders vorteilhaftes Ausführungsbeispiel der Erfindung. Das zu positionierende mikrooptische Bauteil BT ist hier ein dünnes Plättchen, etwa ein Interferenzfilter. Wie in der Vorderansicht in Fig. 3b erkennbar, steht das Plättchen BT aufrecht auf dem Träger TR. Aufgrund der schmalen Standfläche und des hoch über der Oberfläche des Trägers TR liegenden Schwerpunktes neigt das Plättchen dazu, auf dem Träger zu kippen. Wenn der Schwerpunkt des Plättchens nicht allzu hoch über der Oberfläche des Trägers liegt, kann das Plättchen, wie in Fig. 4 dargestellt, unmittelbar auf die ebene Oberfläche des Trägers TR aufgesetzt sein. Bei dem in den Fig. 3a und 3b dargestellten Ausführungsbeispiel liegt der Schwerpunkt des Plättchens jedoch sehr hoch über der Oberfläche des Trägers. In diesem Fall ist es günstiger, den Träger mit einer spaltförmigen Ausnehmung zu versehen und das Plättchen in diese Ausnehmung einzusetzen. Wie in den Zeichnungen dargestellt, wird dadurch der Schwerpunkt des Plättchens abgesenkt. Als Folge dessen kann durch knapp über der Oberfläche des Trägers liegende Stützpunkte das Plättchen BT mechanisch stabilisiert und insbesondere ein Kippen verhindert werden.

Erfindungsgemäß sind die Stützpunkte zu beiden Seiten des Plättchens BT angeordnet. Kugelförmige, in Ausnehmungen A1...A4 eingesetzte Führungselemente FE1...FE4 berühren das Plättchen BT an vier Punkten. Vorzugsweise sind die Stützpunkte, d. h. die Punkte, an denen die Führungselemente FE1...FE4 das Plättchen BT berühren, unterschiedlich weit von der Oberfläche des Trägers TR entfernt. Dies kann etwa dadurch realisiert werden, daß die kugelförmigen Führungselemente FE1...FE4 unterschiedliche Durchmesser haben. Wenn, wie in Fig. 3a erkennbar, die Führungselemente FE1 und FE2 einen größeren Durchmesser haben als die beiden anderen Führungselemente FE3 und FE4, dann werden nicht nur Kippbewegungen um die Längsachse, sondern auch solche um die Raumdiagonalen des Plättchens BT wirkungsvoll verhindert. Damit kann auch dann, wenn das Plättchen BT nicht eben auf der Oberfläche des Trägers TR oder der Bodenfläche der spaltförmigen Ausnehmung steht, eine eindeutige Lagefixierung erzielt werden. Aktive Justierungsschritte sind somit überflüssig.

Wie die Lage der Stützpunkte zu wählen ist, hängt vor allem von der Geometrie des mikrooptischen Bauteils ab. So kann es u. U. günstiger sein, die höher liegenden Stützpunkte nicht nebeneinander, sondern über Kreuz anzuordnen, wie dies in der in Fig. 4 dargestellten Vorderansicht gezeigt ist. Hier liegen sich die unterschiedlich hoch angeordneten Stützpunkte unmittelbar gegenüber. Auf der Seite des kleinen Führungselements FE3 befindet sich ein Führungselement FE1 mit größerem Durchmesser; das Führungselement FE4 verdeckt in Fig. 4 das hinter ihm angeordnete kleinere Führungselement FE2.

Es versteht sich, daß die Realisierung der Erfindung nicht auf die hier beschriebenen Ausführungsbeispiele beschränkt ist. Vielfältige Abwandlungen der Ausführungsbeispiele sind möglich und sinnvoll. Besonders vorteilhaft ist die Erfindung vor allem dann einsetzbar, wenn mikrooptische Bauteile auf einem Träger positioniert werden sollen, die hoch sind und eine schmale Grundfläche haben. Dies trifft beispielsweise auf Diffusionslinsen, optische Gitter und Spiegel zu. Als Führungselemente bieten sich insbesondere Abschnitte von optischen Übertragungsfasern oder unbeschichtete Mikrolinsen an, die sehr genau gefertigt und dennoch kostengünstig sind. Die Erfindung ist jedoch nicht auf kugel- oder zylinderförmige Führungselemente beschränkt. Zur Führung können z. B. auch Führungsstifte eingesetzt werden, deren Querschnitt die Form eines Vielecks hat und die beispielsweise zur Ausrichtung von Baugruppen in optischen Modulen verwendet werden.

## Patentansprüche

1. Vorrichtung zur präzisen Anordnung eines mikrooptischen Bauteils (BT) auf einem Träger (TR),
**dadurch gekennzeichnet,**
daß der Träger (TR) Ausnehmungen (A1...A4) hat, in die Führungselemente (FE1...FE4) eingesetzt sind, zwischen denen das mikrooptische Baute (BT) angeordnet ist.

2. Vorrichtung nach Anspruch 1, bei dem die Führungselemente (FE1...FE4) kugel- oder zylinderförmig sind.

3. Vorrichtung nach einem der vorhergehenden Ansprüche, bei der die Punkte, an denen das mikrooptische Baute (BT) den Träger (TR) und die Führungselemente (FE1...FE4) berührt, so angeordnet sind, daß das mikrooptische Baute (BT) um keine Raumachse rotieren kann.

4. Vorrichtung nach einem der vorhergehenden Ansprüche, bei der die Punkte, an denen das mikrooptische Baute (BT) die Führungselemente (FE1...FE4) berührt, unterschiedlich weit von derjenigen Oberfläche des Trägers (TR) entfernt sind, auf der das mikrooptische Bauteil (BT) aufgesetzt ist.

5. Vorrichtung nach einem der vorhergehenden Ansprüche, bei der der Träger (TR) aus Silizium besteht.

6. Vorrichtung nach einem der vorhergehenden Ansprüche, bei der die Führungselemente Mikrokugeln (FE1...FE3 in Fig. 1) oder Abschnitte von optischen Fasern (FE1...FE4 in Fig. 2) sind.

7. Vorrichtung nach einem der vorhergehenden Ansprüche, bei der das mikrooptische Bauteil ein Interferenzfilter (BT in Fig. 3a und 3b) ist.

8. Vorrichtung nach Anspruch 2, bei der
- der Träger (BT in Fig. 3a und 3b) ein Silizium-Substrat ist
- und die Führungselemente (FE1...FE4) Mikrokugeln sind
- und das mikrooptische Bauteil (BT) quaderförmig ist
- und auf zwei einander gegenüberliegenden Seiten des mikrooptischen Bauteils jeweils zwei Ausnehmungen (A1, A3; A2, A4) sind
- und die Geometrie der Ausnehmungen und der Mikrokugeln so gewählt sind, daß die Punkte, an denen die Mikrokugeln das mikrooptische Baute berühren, unterschiedlich weit von der Oberfläche des Trägers entfernt sind.
